(19) Europäisches Patentamt
European Patent Office
Office européen des brevets

(11) EP 1 304 041 B1

(12) EUROPEAN PATENT SPECIFICATION

(45) Date of publication and mention of the grant of the patent:
**06.04.2005 Bulletin 2005/14**

(51) Int Cl.[7]: **A23K 1/16**, A23K 1/18

(21) Application number: **02080351.6**

(22) Date of filing: **04.07.1997**

(54) **Feed composition for poultry**

Geflügelfutterzusammensetzung

Composition d'alimentation pour volaille

(84) Designated Contracting States:
**BE ES FR NL PT**

(30) Priority: **08.07.1996 JP 17808396**

(43) Date of publication of application:
**23.04.2003 Bulletin 2003/17**

(62) Document number(s) of the earlier application(s) in accordance with Art. 76 EPC:
**97929534.2 / 0 913 095**

(73) Proprietor: **IDEMITSU PETROCHEMICAL CO., LTD.**
**Minato-ku, Tokyo (JP)**

(72) Inventors:
- **Aoyama,Tomoya,**
**c/o Idemitsu Kosan Kabushiki Kaisha**
**Sodegaura-shi, chiba (JP)**
- **Sugimoto,Yasuaki,Idemitsu Kosan Kabushiki Kaisha**
**1280,Kamiizumi,Sodegaura-shi,Chiba, (JP)**

(74) Representative: **Bannerman, David Gardner et al**
**Withers & Rogers,**
**Goldings House,**
**2 Hays Lane**
**London SE1 2HW (GB)**

(56) References cited:
**WO-A-92/21331** **US-A- 4 657 766**

- **PATENT ABSTRACTS OF JAPAN vol. 1997, no. 11, 28 November 1997 (1997-11-28) -& JP 09 187229 A (IDEMITSU MATERIAL KK), 22 July 1997 (1997-07-22)**
- **PATENT ABSTRACTS OF JAPAN vol. 1995, no. 08, 29 September 1995 (1995-09-29) -& JP 07 123928 A (AJINOMOTO CO INC;OTHERS: 01), 16 May 1995 (1995-05-16)**
- **R.L. OWEN ET AL: "Effect of age of exposure and dietary acidification or alkalinization on broiler pulmonary hypertension syndrome" JOURNAL OF APPLIED POULTRY RESEARCH, vol. 3, 1994, pages 244-252, XP008014368 APPLIED POULTRY SCIENCE, ATHENS, GA,, US ISSN: 1056-6171**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 304 041 B1

## Description

### TECHNICAL FIELD

The present invention relates to a feed composition for poultry and, more specifically, to a feed composition for poultry which has such excellent effects that it effectively prevents ascites and sudden death syndrome which occur during the raising of poultry raised mainly for carnivorous purposes such as chickens, particularly broilers, and that it improves the survival rate.

### BACKGROUND ART

In the poultry industry, specifically chickens, particularly broilers, breeding and feeding technologies for chicken production used have been developed with importance attached to the weight increasing rate and feed conversion rate so as to seek after improvement in productivity. However, since the development of the function of the heart does not keep up with the weight increasing rate during the period of growth, cardiac insufficiencies and ascites have occurred frequently in chickens, which has given a great economic blow to the broiler industry. Especially under such conditions that a large amount of oxygen is required as in raising environments such as in winter and highlands and during the period of growth, or that oxygen is insufficient as in the case of raising a large number of chickens in a closed environment, the occurrence of the above diseases is marked.

Technologies for preventing the ascites and sudden death syndrome (may be referred to as "SDS" hereinafter) of broilers have been developed and the following three technologies have been known so far.

(1) Quinones containing a coenzyme Q are prescribed to protect broilers from ascites and to improve the survival rate (Japanese Laid-open Patent Application No. 6-287136).

(2) A feed containing coenzymes $Q_9$ - $Q_{10}$ for preventing ascites and sudden death syndrome (Japanese Laid-open Patent Application No. 7-123928).

(3) 1% of sodium hydrogencarbonate is added to an ordinary feed to prevent ascites (J. Appl. Poultry Res. Vol. 3, pp. 244-252, 1994).

However, although a certain measure of effect can be obtained by the above technologies, ascites and sudden death syndrome still occur. Therefore, the development of a technology which can achieve a more perfect prevention effect has been desired. In the technology (3), since a large amount of sodium hydrogencarbonate is added to a feed, there are problems such as the amount of water drunk by a broiler increases or the feed scattered on the floor becomes rotten, thereby deteriorating sanitary conditions.

If a feed containing a component having a pharmaceutical effect, such as a coenzyme Q, is kept at normal temperature after preparation, the component changes into another substance by oxidation or degradation along with the passage of time, whereby the content of the component contained in the feed decreases and disappears in the end. Thereby, a feed containing a component having a pharmaceutical effect such as a coenzyme Q which has been kept at room temperature for a long time has involved such a risk that the component having a pharmaceutical effect which is first added to the feed may not function fully and a substance generated from the component by conversion may cause trouble in chickens. To prevent this, close attention is paid to the management including storage of a feed, low-temperature storage is carried out, countermeasures against long-time transportation at high temperature season are taken, and a feed is consumed quickly after preparation. However, all of those prevent a reduction in feed costs, and it is feared that trouble is caused by imperfect storage of a feed.

### DISCLOSURE OF THE INVENTION

In view of the above problems, it is an object of the present invention to provide a feed composition for poultry which has such excellent effects that it prevents ascites and sudden death syndrome effectively during the raising of poultry raised mainly for meat production purposes such as chickens, particularly broilers, and that it improves the survival rate as well as a feed composition for poultry which can preserve an effective component stably during the storage of a feed and maintain a pharmaceutical effect in addition to the above excellent effects.

The present inventors have conducted an intensive study to solve the above problems and has found that ascites and sudden death syndrome are prevented much more when a feed containing a pharmaceutical preparation which comprises a combination of a coenzyme Q and an ammonia generation inhibitor is given to broilers than when a feed containing only a coenzyme Q is given to the broilers, thereby greatly reducing the mortality rate of broilers and improving the survival rate.

That is, the present invention is a feed composition for poultry which contains a coenzyme Q and an ammonia

generation inhibitor.

Examples of the coenzyme Q used in the feed composition for poultry of the present invention may include coenzyme $Q_9$ represented by the following general formula (I) and coenzyme $Q_{10}$ represented by the following general formula (II).

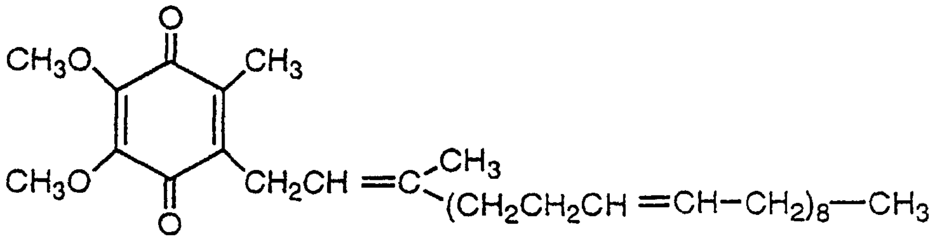

( I )

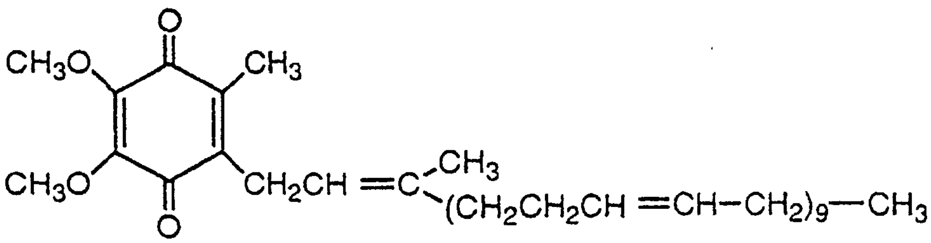

( II )

Further, the content of the coenzyme Q contained in the feed composition for poultry of the present invention is, to state specifically, about 0.0005 to 0.5 wt% based on the total amount of the feed composition.

Furthermore, the ammonia generation inhibitor used in the feed composition for poultry of the present invention is exemplified by dialdehyde starch, Yucca extract, sarsasaponin and hydroxamic acid.

When the feed composition for poultry of the present invention contains a coenzyme Q and an ammonia generation inhibitor, the weight ratio of the coenzyme Q to the ammonia generation inhibitor in the composition is preferably about 100:1 to 1:100.

The effect of preventing ascites and sudden death syndrome can be improved much more when the feed composition for poultry of the present invention which contains a coenzyme Q and an ammonia generation inhibitors is fed to poultry, specifically chickens, particularly broilers, than when a feed containing only a coenzyme Q is fed. Thereby, a great economic blow to the broiler industry can be avoided.

The present invention is described in detail hereinunder. A description is first given of the feed composition for poultry of the present invention containing a coenzyme Q and an ammonia generation inhibitor.

(1) Feed composition for poultry of the present invention containing a coenzyme Q and and an ammonia generation inhibitor.

The coenzyme Q contained in the feed composition for poultry of the present invention is not limited to a particular kind if it is a compound which can fall under the category of coenzymes Q. Illustrative examples of the coenzyme Q include coenzyme $Q_6$, coenzyme $Q_7$, coenzyme $Q_8$, coenzyme $Q_9$, coenzyme $Q_{10}$ and reduction-type (quinol-type) coenzymes Q thereof. Out of these coenzymes Q, coenzyme $Q_9$ represented by the above general formula (I) and coenzyme $Q_{10}$ represented by the above general formula (II) are preferably used in the feed composition of the present invention.

As for the coenzyme Q contained in the feed composition for poultry of the present invention, filamentous fungi belonging to the genus *Mucor, Mortierella* or the like, yeasts belonging to the genus *Candida, Saccharomyces* or the like, bacilli belonging to the genus *Pseudomonas, Achromobacter, Rhodopseudomonas* or the like, tobacco leaves, germs of corn, wheat etc. are known as source materials of the coenzyme Q. The coenzyme Q is obtained from the above source materials by extraction and purification in accordance with a commonly used method. When the coenzyme Q is blended into the feed composition for poultry of the present invention, a purified product of the

coenzyme Q obtained as described above may be blended. Alternatively, an extract or a roughly purified product obtained from the above source materials, or any one of the source materials itself when the concentration of the coenzyme Q contained in the source materials is high can be blended. Further, a chemically synthesized coenzyme Q product which is commercially available may be used in the present invention. A composition prepared by mixing a coenzyme Q with other pharmaceutical agent, diluent, carrier and excipient can also be blended.

Further, the content of the coenzyme Q in the feed composition for poultry of the present invention is preferably about 0.0005 to 0.5 wt% based on the total amount of the feed composition. Furthermore, in the present invention, a composition containing the coenzyme Q can be used as described above. In this case, the composition containing the coenzyme Q may be blended in the feed composition in such an amount that the content of the coenzyme Q should be 0.0005 to 0.5 wt% based on the total amount of the feed composition.

Further, the feed composition for poultry of the present invention contains an ammonia generation inhibitor in addition to the coenzyme Q.

The ammonia generation inhibitor used in the present invention is not limited to a particular kind if it has a function to suppress the generation of ammonia in the body of a chicken. Illustrative examples of the agent include substances having a function to absorb ammonia in the intestines and excrete it to the outside of the body, such as dialdehyde starch (may be referred to as "DAS" hereinafter), and substances having a function as an urease inhibitor, such as Yucca extract, sarsasaponin and hydroxamic acid. These ammonia generation inhibitors may be used alone or in admixture of two or more. The Yucca extract is an extract of Yucca schidigera which is belonging to a *Liliacede* plant.

Furthermore, out of these ammonia generation inhibitors, DAS is preferably used in the present invention. DAS can be produced by a commonly used method and a commercial product can be used. However, DAS having an aldehydization rate of 30 to 60 % is preferably used. Other ammonia generation inhibitors such as Yucca extract, sarsasaponin, hydroxamic acid and the like described above and used in the present invention can be produced by commonly used methods or commercial products can be used as well. It is also possible to blend compositions prepared by mixing these ammonia generation inhibitors with other pharmaceutical agent, diluent, carrier, excipient and the like into the feed composition of the present invention.

When the feed composition for poultry of the present invention contains an ammonia generation inhibitor and a coenzyme Q, the weight ratio of the coenzyme Q to the ammonia generation inhibitor contained in the composition is preferably about 100:1 to 1:100.

In the above feed composition for poultry of the present invention, an ammonia generation inhibitor is used in combination with the coenzyme Q.

The feed composition for poultry of the present invention contains optional components other than the above essential components. For example, the optional components include as nutrient components such as corn, milo, soybean cake, vegetable oil, fish meal, wheat bran and wheat; mineral components such as sodium chloride, calcium carbonate, calcium secondary phosphate and a trace amount of mineral; vitamin formulations such as vitamin AD and vitamin B formulations; antibiotics such as salinomycin (anti-coccidium agent), colistin sulfate, enramycin and virginiamycin; components having pharmaceutical effects such as choline chloride.

The feed composition for poultry of the present invention is produced by blending the above raw materials, that is, a coenzyme Q, and an ammonia generation inhibitor, and optional components which are blended into an ordinary feed, and mixing them uniformly. It should be noted that the blending amount of each of the above raw materials is described above.

The dosage of the thus obtained feed composition for poultry of the present invention containing a coenzyme Q and an ammonia generation inhibitor and the method of feeding it to poultry can be the same as those when an ordinary feed is used.

For instance, when a chicken is fed with the feed composition for poultry of the present invention for raising in the same manner as the ordinary feed, the dosage of the coenzyme Q for the chicken can be about 0.05 to 50 mg/kg weight per day which is calculated from the content of the coenzyme Q in the feed composition for poultry of the present invention and the normal feed intake of the chicken. As for other substances administered together with the coenzyme Q, their dosages per weight for each day can be calculated from their blending ratios to the coenzyme Q. When the above substances are blended into the feed and the chicken ingests them in the above dosages, the occurrence of ascites and SDS in the chicken in the stage of growth can be prevented and the survival rate can be improved.

Further, when the above feed composition for poultry of the present invention containing a coenzyme Q and an ammonia generation inhibitor is given to poultry, it may be given to the poultry throughout the raising period of the poultry, or the feed composition for poultry of the present invention and an ordinary feed can be given to the poultry at intervals of a certain time alternately.

For instance, it is possible to feed the broilers with the ordinary feed for a period from its birth to about 21 days old and then the feed composition of the present invention for the period of rapid growth from about 22 days old to the day of shipment. Alternatively, it is also possible to feed the broilers with the feed composition of the present invention for a period from its birth to about 21 days old when it is easily subjected to a cold stress and continuously

with the feed composition of the present invention during a period from about 22 days old to the day of shipment. It is preferred that the feed composition of the present invention should be given for 20 consecutive days or more.

The poultry to which the above feed composition for poultry of the present invention containing a coenzyme Q and an ammonia generation inhibitor is applied is not limited to a particular kind if it belongs to poultry. For example, the feed composition for poultry of the present invention can exhibit a great effect to chickens for meat production, particularly broilers which are raised in a limited environment for a short period of time. The feed composition for poultry of the present invention can also be applied to poultry other than poultry for meat production, such as laying chickens in the stage of growth.

BEST MODE FOR CARRYING OUT THE INVENTION

The following examples are given to further illustrate the present invention. A description is first given of production examples of the coenzyme $Q_{10}$ formulation, vitamin E formulation and DAS formulation to be blended into the feed composition for poultry of the following examples and comparative examples.

Production Example 1 : Coenzyme $Q_{10}$ formulation

A coenzyme $Q_{10}$ formulation was produced by blending 20 g of coenzyme $Q_{10}$ based on 1 kg of wheat bran and mixing them uniformly.

Production Example 2 : Vitamin E formulation

A vitamin E formulation was produced by blending 45,000 mg of d1-α-tocopheryl acetate (45,000 IU in terms of vitamin E activity) based on 1 kg of wheat bran and mixing them uniformly.

Production Example 3 : DAS formulation

A DAS formulation was produced by blending 20 g of DAS, of which aldehydization rate is 50%, based on 1 kg of wheat bran and mixing them uniformly.

A description is subsequently given of examples prepared using the formulations obtained in the above Production Examples.

Examples 1 and 2

Components shown in Table 1 were mixed to prepare feed compositions containing coenzyme $Q_{10}$ and vitamin E as Examples 1 and 2. For comparison, feed compositions which contain vitamin E but do not contain a coenzyme Q were prepared as Comparative Examples 1 and 2 and feed compositions which contain a coenzyme Q but do not contain vitamin E were prepared as Comparative Examples 3 and 4.

Table 1

| Components | Blending proportion (wt%) | | | | | |
|---|---|---|---|---|---|---|
| | Examples | | Comparative Examples | | | |
| | 1 | 2 | 1 | 2 | 3 | 4 |
| Feed A (components; see Table 2) | 99.8 | - | 99.9 | - | 99.9 | - |
| Feed B (components; see Table 2) | - | 99.8 | - | 99.9 | - | 99.9 |
| Vitamin E formulation of Production Example 2 | 0.1 | 0.1 | 0.1 | 0.1 | - | - |
| Coenzyme $Q_{10}$ of Production Example 1 | 0.1 | 0.1 | - | - | 0.1 | 0.1 |

Table 2

| Components | Blending proportion (parts by weight) | |
|---|---|---|
| | Basic feed A | Basic feed B |
| corn | 47.7 | 50.2 |
| milo | 10.0 | 20.0 |

Table 2 (continued)

| Components | Blending proportion (parts by weight) | |
|---|---|---|
| | Basic feed A | Basic feed B |
| soybean cake | 24.8 | 13.6 |
| vegetable oil | 3.9 | 4.2 |
| fish meal | 9.0 | 8.0 |
| wheat bran | 1.3 | 2.5 |
| sodium chloride | 0.3 | 0.2 |
| calcium secondary phosphate | 0.5 | 0.5 |
| vitamin AD formulation | 0.05 | 0.05 |
| vitamin B formulation | 0.1 | 0.1 |
| a trace amount of mineral | 0.05 | 0.05 |
| salinomycin (50 kg titer/kg) | 0.1 | 0.1 |
| virginiamycin (8 g titer/kg) | 0.15 | 0.15 |
| choline chloride(50% powder) | 0.05 | 0.05 |

In the above Table 2, the vitamin AD formulation contains 10,000 IU/g of vitamin A and 2,000 IU/g of vitamin $D_3$, and the vitamin B formulation contains 2 g/kg of Vitamin $B_1$, 10 g/kg of vitamin $B_2$, 2 g/kg of vitamin $B_6$, 2 g/kg of nicotinamide, 4 g/kg of calcium pantothenate, 120 g/kg of choline chloride and 1 g/kg of folic acid. The trace amount of mineral contains 8.0 % of Mn, 0.6 % of Fe, 0.06 % of Cu, 0.1 % of I and 5.0 % of Zn. It should be noted that salinomycin and virginiamycin are blended as anti-coccidium agent and antibiotic, respectively.

<Evaluation of feed compositions of Examples 1 and 2>

The feed compositions obtained in the above Examples and Comparative Examples were used to raise broilers and the effect of protecting the broilers from ascites and SDS by each of the feed compositions and the survival rate were evaluated.

Groups of day old broiler chicks (kind: Chunky (Roth Breeders Co.), mixtures of male and female broilers), each group consisting of 48 broiler chicks, were raised in a windless house (floor feeding) until 50 days old. As for raising conditions, the environmental temperature inside of the broiler house was set and controlled to temperatures shown in Table 3 (5 ± 1°C or lower for a period from 14 days old to 21 days old after the start of raising as a cooling sensation period and 21 to 26°C for other periods) at which ascites were easily caused.

Table 3

| Raising period | 0 to 3 days old | 4 days old to 13 days old | 14 days old to 21 days old | 22 days old to 31 days old | 32 days old to 50 days old |
|---|---|---|---|---|---|
| Temperature (°C) | 26°C | 25°C | 5 ± 1°C | 23°C | 21°C |

The group of broilers of Test Example 1 were fed with the feed composition obtained in Example 1 in the former stage (from birth to 21 days old, the same shall apply hereinunder) and the feed composition obtained in Example 2 in the latter stage (from 22 days old to 50 days old, the same shall apply hereinunder). For comparison, the group of broiler of Test Example 2 were fed with the feed composition obtained in Comparative Example 1 in the former stage and the feed composition obtained in Comparative Example 2 in the latter stage. Furthermore, the group of broilers of Test Example 3 were fed with the feed composition obtained in Comparative Example 3 in the former stage and the feed composition obtained in Comparative Example 4 in the latter stage. It should be noted that, during the raising period, the broilers had freely access to water and the feed compositions.

The broilers were raised under the above conditions and the number of broilers which died during the raising period was counted. The cause of death was identified for each of the dead broilers. After the completion of the raising period, the mortality rate of each group from ascites, SDS and others, the total of the mortality rates and the survival rate were calculated. The average weight was also calculated after the weights of the broilers were measured. The results are shown in Table 4.

Table 4

| | | | Test Example 1 | Test Example 2 | Test Example 3 |
|---|---|---|---|---|---|
| Feed composition used | Former stage (from 0 to 21) | | Feed of Example 1 | Feed of Comparative Example 1 | Feed of Comparative Example 3 |
| | Latter stage (from 22 to 50) | | Feed of Example 2 | Feed of Comparative Example 2 | Feed of Comparative Example 4 |
| Total number of broilers | | | 48 | 48 | 48 |
| Number of dead broilers (mortality rate) | Total | | 2(4.2%) | 13(27.1%) | 7(14.6%) |
| | Causes | Ascites | 1(2.1%) | 9(18.7%) | 4(8.3%) |
| | | SDS | 0 | 2(4.2%) | 1(2.1%) |
| | | Others | 1(2.1%) | 2(4.2%) | 2(4.2%) |
| Survival rate | | | 46(95.8%) | 35(72.9%) | 41(85.4%) |
| Average weight (g) | | | 2780 | 2530 | 2690 |

As is evident from the above results, the group of broilers of Test Example 1 which were fed with the feed composition of the present invention which contained both a coenzyme Q and vitamin E have a lower mortality rate from ascites and SDS and total mortality rate and a higher survival rate than the group of broilers of Test Example 2 which were fed with the feed compositions of Comparative Examples which contained only vitamin E and the group of broilers of Test Example 3 which were fed with the feed compositions of Comparative Examples which contained only a coenzyme Q. It is understood that the group of broilers of Test Example 1 were well grown with a larger average weight than the broilers of the other two groups.

Examples 3 and 4 (not forming part of the present invention)

Components shown in Table 5 were mixed to prepare feed compositions containing coenzyme $Q_{10}$ and sodium hydrogencarbonate as Examples 3 and 4. For comparison, feed compositions containing sodium hydrogencarbonate but not a coenzyme Q were prepared as Comparative Examples 5 and 6.

Table 5

| Components | Blending proportion (wt%) | | | |
|---|---|---|---|---|
| | Examples | | Comparative Examples | |
| | 3 | 4 | 5 | 6 |
| Basic feed A (components; see Table 2) | 99.4 | - | 99.5 | - |
| Basic feed B (components; see Table 2) | - | 99.4 | - | 99.5 |
| Sodium hydrogencarbonate | 0.5 | 0.5 | 0.5 | 0.5 |
| Coenzyme $Q_{10}$ formulation of Production Example 1 | 0.1 | 0.1 | - | - |

<Evaluation of feed compositions of Examples 3 and 4>

The feed compositions obtained in the above Examples and Comparative Examples were used to raise broilers and the effect of protecting the broilers from ascites and SDS by each of the feed compositions and the survival rate were evaluated.

Groups of day old broiler chicks (kind: Chunky (Roth Breeders Co.), mixtures of male and female broilers), each group consisting of 48 broiler chicks, were raised in a windless house (floor feeding) until 50 days old. The

environmental temperature inside of the broiler house was the same as that in the above experiment on the evaluation of the feed compositions of Examples 1 and 2.

The group of broilers of Test Example 4 were fed with the feed composition obtained in Example 3 in the former stage (from birth to 21 days old, the same shall apply hereinunder) and the feed composition obtained in Example 4 in the latter stage (from 22 days old to 50 days old, the same shall apply hereinunder). For comparison, the group of broiler of Test Example 5 were fed with the feed composition obtained in Comparative Example 5 in the former stage and the feed composition obtained in Comparative Example 6 in the latter stage. Further, the group of broilers of Test Example 6 were fed with the feed composition obtained in Comparative Example 3 in the former stage and the feed composition obtained in Comparative Example 4 in the latter stage. During the raising period, the broilers had freely access to water and the feed compositions.

The broilers were raised under the above conditions and the number of broilers which died during the raising period was counted. The cause of death was identified for each of the dead broilers. After the completion of the raising period, the mortality rate of each group from ascites, SDS and others, the total of the mortality rates and the survival rate were calculated. The average weight was also calculated after the weights of the broilers were measured. The results are shown in Table 6.

Table 6

| | | | Test Example 4 | Test Example 5 | Test Example 6 |
|---|---|---|---|---|---|
| Feed composition used | Former stage (from 0 to 21) | | Feed of Example 3 | Feed of Comparative Example 5 | Feed of Comparative Example 3 |
| | Latter stage (from 22 to 50) | | Feed of Example 4 | Feed of Comparative Example 6 | Feed of Comparative Example 4 |
| Total number of broilers | | | 48 | 48 | 48 |
| Number of dead broilers (mortality rate) | Total | | 3(6.2%) | 13(27.1%) | 6(12.5%) |
| | Causes | Ascites | 1(2.1%) | 8(16.6%) | 3(6.2%) |
| | | SDS | 0 | 2(4.2%) | 1(2.1%) |
| | | Others | 2(4.1%) | 3(6.3%) | 2(4.2%) |
| Survival rate | | | 45(93.8%) | 35(72.9%) | 42(87.5%) |
| Average weight (g) | | | 2750 | 2531 | 2740 |

As is evident from the above results, the group of broilers of Test Example 4 which were fed with the feed composition of the present invention which contained both a coenzyme Q and sodium hydrogencarbonate have a lower mortality rate from ascites and SDS and total mortality rate and a higher survival rate than the group of broilers of Test Example 5 which were fed with the feed compositions of Comparative Examples which contained only sodium hydrogencarbonate and the group of broilers of Test Example 6 which were fed with the feed compositions of Comparative Examples which contained only a coenzyme Q. It is understood that the broilers of Test Example 4 were well grown with the equivalent or larger average weight than the broilers of the other two groups.

Examples 5 and 6

Components shown in Table 7 were mixed to prepare feed compositions containing coenzyme $Q_{10}$ and DAS as Examples 5 and 6. For comparison, feed compositions containing DAS but not a coenzyme Q were prepared as Comparative Examples 7 and 8.

Table 7

| Components | Blending proportion (wt%) | | | |
|---|---|---|---|---|
| | Examples | | Comparative Examples | |
| | 5 | 6 | 7 | 8 |
| Basic feed A (components; see Table 2) | 99.8 | - | 99.9 | - |
| Basic feed B (components; see Table 2) | - | 99.8 | - | 99.9 |
| DAS formulation of Production Example 3 | 0.1 | 0.1 | 0.1 | 0.1 |
| Coenzyme $Q_{10}$ formulation of Production Example 1 | 0.1 | 0.1 | - | - |

<Evaluation of feed compositions of Examples 5 and 6>

The feed compositions obtained in the above Examples and Comparative Examples were used to raise broilers and the effect of protecting the broilers from ascites and SDS by each of the feed compositions and the survival rate were evaluated.

Groups of day old broiler chicks (kind: Chunky (Roth Breeders Co.), mixtures of male and female broilers), each group consisting of 48 broiler chicks, were raised in a windless house (floor feeding) until 50 days old. The environmental temperature inside of the broiler house was the same as that in the above experiment on the evaluation of the feed compositions of Examples 1 and 2.

The group of broilers of Test Example 7 were fed with the feed composition obtained in Example 5 in the former stage (from birth to 21 days old, the same shall apply hereinunder) and the feed composition obtained in Example 6 in the latter stage (from 22 days old to 50 days old, the same shall apply hereinunder). For comparison, the group of broiler of Test Example 8 were fed with the feed composition obtained in Comparative Example 7 in the former stage and the feed composition obtained in Comparative Example 8 in the latter stage. Furthermore, the group of broilers of Test Example 9 were fed with the feed composition obtained in Comparative Example 3 in the former stage and the feed composition obtained in Comparative Example 4 in the latter stage. During the raising period, the broilers had freely access to water and the feed compositions.

The broilers were raised under the above conditions and the number of broilers which died during the raising period was counted. The cause of death was identified for each of the dead broilers. After the completion of the raising period, the mortality rate of each group from ascites, SDS and others, the total of the mortality rates and the survival rate were calculated. The average weight was also calculated after the weights of the broilers were measured. The results are shown in Table 8.

Table 8

| | | | Test Example 7 | Test Example 8 | Test Example 9 |
|---|---|---|---|---|---|
| Feed composition used | Former stage (from 0 to 21) | | Feed of Example 5 | Feed of Comparative Example 7 | Feed of Comparative Example 3 |
| | Latter stage (from 22 to 50) | | Feed of Example 6 | Feed of Comparative Example 8 | Feed of Comparative Example 4 |
| Total number of broilers | | | 48 | 48 | 48 |
| Number of dead broilers (mortality rate) | Total | | 2(4.2%) | 9(18.7%) | 5(10.4%) |
| | Causes | Ascites | 1(2.1%) | 6(12.4%) | 3(6.2%) |
| | | SDS | 0 | 1(2.1%) | 1(2.1%) |
| | | Others | 1(2.1%) | 2(4.2%) | 1(2.1%) |
| Survival rate | | | 46(95.8%) | 39(81.3%) | 43(89.6%) |
| Average weight (g) | | | 2770 | 2720 | 2760 |

As is evident from the above results, the group of broilers of Test Example 7 which were fed with the feed composition of the present invention which contained both a coenzyme Q and DAS have a lower mortality rate from ascites and SDS and total mortality rate and a higher survival rate than the group of broilers of Test Example 8 which were fed with the feed compositions of Comparative Examples which contained only DAS and the group of broilers of Test Example 9 which were fed with the feed compositions of Comparative Examples which contained only a coenzyme Q. It is understood that the broilers of Test Example 7 were well grown with the equivalent or larger average weight than the broilers of the other two groups.

Examples 7 and 8 (not forming part of the present invention)

Components shown in Table 9 were mixed to prepare feed compositions containing coenzyme $Q_{10}$ and processed yeast cells as Examples 7 and 8. For comparison, feed compositions containing processed yeast cells but not a coenzyme Q were prepared as Comparative Examples 9 and 10 and feed compositions containing a coenzyme Q but not processed yeast cells were prepared as Comparative Examples 11 and 12. The torula yeast processed product used in these examples is Torula yeast produced by Kojin Co. which is a thermally decomposed product of *Torulopsis utilis*. The coenzyme $Q_{10}$ (reagent name: Ubiquinone 10) produced by Wako Pure Chemical Industries, Ltd. was used as the coenzyme Q.

Table 9

| Components | Blending proportion (parts by weight) | | | | | |
|---|---|---|---|---|---|---|
| | Examples | | Comparative Examples | | | |
| | 7 | 8 | 9 | 10 | 11 | 12 |
| Basic feed C (components; see Table 10) | 1000 | - | 1000 | - | 1000 | - |
| Basic feed D (components; see Table 10) | - | 1000 | - | 1000 | - | 1000 |
| Coenzyme $Q_{10}$ | 0.02 | 0.02 | - | - | 0.02 | 0.02 |
| Torula yeast processed product | 0.98 | 0.98 | 1 | 1 | - | - |
| wheat bran | - | - | - | - | 0.98 | 0.98 |

Table 10

| Components | Blending proportion (parts by weight) | |
|---|---|---|
| | Basic feed C | Basic feed D |
| corn | 47.0 | 49.5 |
| milo | 10.0 | 20.0 |
| soybean cake | 24.8 | 13.6 |
| vegetable oil | 3.9 | 4.2 |
| fish meal | 9.0 | 8.0 |
| wheat bran | 1.3 | 2.5 |
| sodium chloride | 0.3 | 0.2 |
| calcium carbonate | 0.7 | 0.7 |
| calcium secondary phosphate | 0.5 | 0.5 |
| vitamin ADE formulation | 0.05 | 0.05 |
| vitamin B formulation | 0.1 | 0.1 |
| a trace amount of mineral | 0.05 | 0.05 |
| salinomycin (50 kg titer/kg) | 0.1 | 0.1 |
| virginiamycin (8 g titer/kg) | 0.15 | 0.15 |
| choline chloride | 0.05 | 0.05 |

In the above Table 10, the vitamin ADE formulation contains 10,000 IU/g of vitamin A, 2,000 IU/g of vitamin D and 10 IU/g of vitamin E, and the vitamin B formulation contains 2 g/kg of Vitamin Bi, 10 g/kg of vitamin $B_2$, 2 g/kg of vitamin $B_6$, 2 g/kg of nicotinamide, 120 g/kg of choline chloride and 1 g/kg of folic acid. The trace amount of mineral contains 8.0 % of Mn, 0.6 % of Fe, 0.06 % of Cu, 0.1 % of I and 5.0 % of Zn. It should be noted that salinomycin and virginiamycin are blended as anti-coccidium agent and antibiotic, respectively.

<Evaluation of feed compositions of Examples 7 and 8 (Experiments on raising of broilers)>

The feed compositions obtained in the above Examples and Comparative Examples were used to raise broilers and the effect of protecting the broilers from ascites and SDS by each of the feed compositions and the survival rate were evaluated.

Groups of day old broiler chicks (kind: Chunky (Roth Breeders Co.), mixtures of male and female broilers), each group consisting of 48 broiler chicks, were raised in a windless house (floor feeding) until 50 days old. The environmental temperature inside of the broiler house was the same as that in the above experiment on the evaluation of the feed compositions of Examples 1 and 2.

The group of broilers of Test Example 10 were fed with the feed composition obtained in Example 7 in the former stage (from birth to 21 days old, the same shall apply hereinunder) and the feed composition obtained in Example 8 in the latter stage (from 22 days old to 50 days old, the same shall apply hereinunder). For comparison, the group of broilers of Test Example 11 were fed with the feed composition obtained in Comparative Example 9 in the former stage and the feed composition obtained in Comparative Example 10 in the latter stage. Further, the group of broilers of Test Example 12 were fed with the feed composition obtained in Comparative Example 11 in the former stage and the feed composition obtained in Comparative Example 12 in the latter stage. During the raising period, the broilers had freely access to water and the feed compositions.

The broilers were raised under the above conditions and the number of broilers which died during the raising period was counted. The cause of death was identified for each of the dead broilers. After the completion of the raising period, the mortality rate of each group from ascites, SDS and others, the total of the mortality rates and the survival rate were calculated. The average weight was also calculated after the weights of the broilers were measured. The results are shown in Table 11.

Table 11

| | | | Test Example 10 | Test Example 11 | Test Example 12 |
|---|---|---|---|---|---|
| Feed composition used | Former stage (from 0 to 21) | | Feed of Example 7 | Feed of Comparative Example 9 | Feed of Comparative Example 11 |
| | Latter stage (from 22 to 50) | | Feed of Example 8 | Feed of Comparative Example 10 | Feed of Comparative Example 12 |
| Total number of broilers | | | 48 | 48 | 48 |
| Number of dead broilers (mortality rate) | Total | | 3(6.3%) | 15(31.3%) | 7(14.6%) |
| | Causes | Ascites | 1(2.1%) | 10(20.8%) | 4(8.3%) |
| | | SDS | 0 | 3(6.3%) | 1(2.1%) |
| | | Others | 2(4.2%) | 2(4.2%) | 2(4.2%) |
| Survival rate | | | 45(93.7%) | 33(68.7%) | 41(85.4%) |
| Average weight (g) | | | 2820 | 2710 | 2705 |

As is evident from the above results, the group of broilers of Test Example 10 which were fed with the feed composition of the present invention which contained both a coenzyme Q and processed yeast cells have a lower mortality rate from ascites and SDS and total mortality rate and a higher survival rate than the group of broilers of Test Example 11 which were fed with the feed compositions of Comparative Examples which contained only processed yeast cells and the group of broilers of Test Example 12 which were fed with the feed compositions of Comparative Examples which contained only a coenzyme Q. It is understood that the broilers of Test Example 10 were well grown with a larger average weight than the broilers of the other two groups.

Examples 9 and 10 (not forming part of the present invention)

Components shown in Table 12 were mixed to prepare feed compositions containing coenzyme $Q_{10}$ and processed yeast cells as Examples 9 and 10. For comparison, feed compositions containing a coenzyme Q but not processed yeast cells were prepared as Comparative Examples 13 and 14. The torula yeast processed product used in these examples is Torula yeast produced by Kojin Co. which is a thermally decomposed product of *Torulopsis utilis* and the beer yeast processed product is a dry yeast of *Saccharomyces cerevisiae* produced by Asahi Brewery Ltd. The coenzyme $Q_{10}$ (reagent name: Ubiquinone 10) produced by Wako Pure Chemical Industries, Ltd. was used as the coenzyme Q.

Table 12

| Components | Blending proportion (wt%) | | | |
|---|---|---|---|---|
| | Examples | | Comparative Examples | |
| | 9 | 10 | 13 | 14 |
| Coenzyme $Q_{10}$ | 1.0 | 1.0 | 1.0 | 1.0 |
| Torula yeast processed product | 90.0 | - | - | - |
| beer yeast processed product | - | 99.0 | - | - |
| soybean oil | 9.0 | - | 9.0 | - |
| rice bran | - | - | 90.0 | - |
| wheat bran | - | - | - | 99.0 |

<Evaluation of feed compositions of Examples 9 and 10 (Storage stability test on coenzyme Q)>

Two different tests on the storage stability of the coenzyme Q contained in the feed compositions obtained in the above Examples 9 and 10 and Comparative Examples 13 and 14 were conducted to evaluate the feed compositions of the present invention.

(1) Storage stability test (1)

The feed composition obtained in the above Example 9 and the feed composition obtained in the above Comparative Example 13 were directly placed in respective polyethylene bags which were then sealed hermetically and left to stand at room temperature for 12 weeks. During this standing period, the concentration of coenzyme $Q_{10}$ contained in the two different feed compositions were measured in accordance with the following method with the lapse of time i.e. at the time of start, after 2 weeks, 4 weeks, 8 weeks and 12 weeks. The results are shown in Table 13.

(Method of measuring concentration of coenzyme $Q_{10}$ in feed composition)

The concentration of coenzyme $Q_{10}$ contained in each of the above feed compositions was measured in accordance with the method of measuring the concentration of coenzyme $Q_{10}$ contained in the excipient of a KR yeast (yeast for feed) ("Sequel of Lectures on Biochemical Experiments" (edited by the Japan Association of Society, Tokyo Kagaku Dojin, Vol. 13, 1975)).

About 0.3 g of the feed composition was precisely weighed as a sample and this weight was recorded as the amount (g) of the sample. This precisely weighed sample was placed in a heat resistant screw bottle (capacity of 100 ml) filled with 100 ml of ethanol (99.5 %) and stirred with a stirrer at room temperature for 10 minutes. Thereafter, the heat resistant screw bottle was placed in a hot bath (50°C) and heated for 15 minutes under agitation at times to extract coenzyme $Q_{10}$. After extraction, the mixture was further stirred with the stirrer at room temperature for 10 minutes.

About 5 ml of the thus obtained suspension was subjected to centrifugal separation (12,000 rpm, 5 minutes), and the thus obtained supernatant was diluted with ethanol as required and applied to a quartz absorbance cell to measure its absorbance at 275 nm with a spectrophotometer. The obtained absorbance is the absorbance of oxidation-type coenzyme $Q_{10}$.

Then, 1 mg of sodium boron hydride was added to the quartz absorbance cell used for the measurement of absorbance and left to stand for about 60 minutes until foaming came to an end. Thereafter, the absorbance at 275 nm of this resulting mixture was measured with a spectrophotometer. The obtained absorbance is the absorbance of reduction-type coenzyme $Q_{10}$.

The measurement values obtained above were inserted into the following equation to calculate the concentration (mg/g) of coenzyme $Q_{10}$ contained in 1 g of the sample down to the second decimal place.

$$\text{Concentration of coenzyme } Q_{10} \text{ (mg/g)} = (A - B) \times 100 \times C/(14.2 \times D)$$

A: absorbance of oxidation-type coenzyme $Q_{10}$
B: absorbance of reduction-type coenzyme $Q_{10}$
C: dilution rate
D: amount of sample (g)

Table 13

| Feed composition / storage period | Concentration of coenzyme $Q_{10}$ in the composition (mg/g) | | | | |
|---|---|---|---|---|---|
| | 0 day | after 2 weeks | after 4 weeks | after 8 weeks | after 12 weeks |
| Feed composition of Example 9 | 1.09 | 1.09 | 1.09 | 1.09 | 1.09 |
| Feed composition of Comparative Example 13 | 1.11 | 0.88 | 0.23 | 0.00 | 0.00 |

(2) Storage stability test (2)

The feed composition obtained in the above Example 10 and the feed composition obtained in the above Comparative Example 14 were directly placed in respective polyethylene bags which were then sealed hermetically and left to stand at 40°C and a relative humidity of 75% for 6 months. During this standing period, the concentration of coenzyme $Q_{10}$ contained in the two different feed compositions were measured in accordance with the same method as in the above test (1) with the lapse of time i.e. at the time of start, after 1 month, 2 months, 3 months and 6 months. The results are shown in Table 14.

Table 14

| Feed composition / storage period | Concentration of coenzyme $Q_{10}$ in the composition (mg/g) | | | | |
|---|---|---|---|---|---|
| | 0 day | after 1 month | after 2 months | after 3 months | after 6 months |
| Feed composition of Example 10 | 1.02 | 1.00 | 0.97 | 0.94 | 0.92 |
| Feed composition of Comparative Example 14 | 1.04 | 0.91 | 0.86 | 0.79 | 0.75 |

It is seen from the above results that the feed compositions of the present invention which contain both a coenzyme Q and processed yeast cells are superior in storage stability to the feed compositions of Comparative Examples which contain a coenzyme Q and not processed yeast cells because the content of the coenzyme Q in the feed composition of the present invention rarely changes with the lapse of time even during 6 months of storage period.

INDUSTRIAL APPLICABILITY

The feed composition for poultry of the present invention which contains a coenzyme Q and an ammonia generation inhibitor has such effects that it prevents ascites and sudden death syndrome effectively during the raising of poultry raised mainly for meat production purposes such as chickens, particularly broilers, and that it improves the survival rate.

**Claims**

1. A feed composition for poultry which contains a coenzyme Q and an ammonia -generating inhibitor.

2. The feed composition for poultry according to claim 1, wherein the weight ratio of the coenzyme Q to ammonia-generating inhibitor contained in the composition is 100:1 to 1:100.

3. The feed composition for poultry according to claim 1 or 2, wherein the ammonia-generating inhibitor is selected from dialdehyde starch, Yucca extract, sarsasaponin and hydroxamic acid.

4. The feed composition for poultry according to any one of claims 1-43, wherein coenzyme Q is coenzyme $Q_9$ represented by the following general formula (I) or coenzyme $Q_{10}$ represented by the following general formula (II).

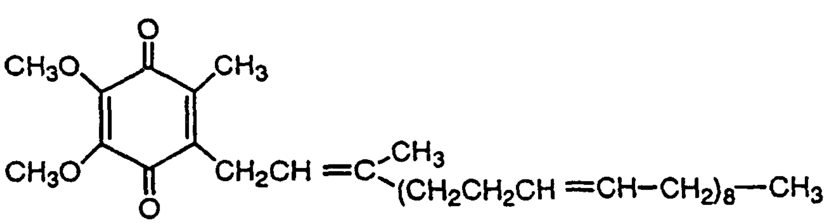

( I )

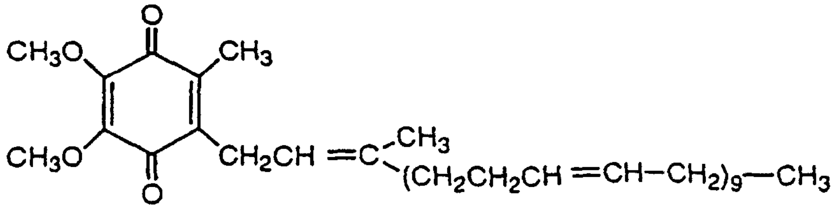

(II)

5. The feed composition for poultry according to any one of claims 1- 4, wherein the content of the coenzyme Q is 0.0005 to 0.5 wt% based on the total amount of the feed composition.

## Patentansprüche

1. Futterzusammensetzung für Geflügel, welche ein Coenzym Q und einen Hemmstoff der Ammoniakbildung enthält.

2. Futterzusammensetzung für Geflügel nach Anspruch 1, wobei das Gewichtsverhältnis des in der Zusammensetzung enthaltenen Coenzyms Q zu dem Hemmstoff der Ammoniakbildung 100:1 bis 1:100 ist.

3. Futterzusammensetzung für Geflügel nach Anspruch 1 oder 2, wobei der Hemmstoff der Ammoniakbildung ausgewählt wird aus Dialdehydstärke, Yuccaextrakt, Sarsasaponin und Hydroxyaminsäure.

4. Futterzusammensetzung für Geflügel nach einem der Ansprüche 1 bis 3, wobei das Coenzym Q das Coenzym $Q_9$, dargestellt durch die folgende allgemeine Formel (I), oder das Coenzym $Q_{10}$, dargestellt durch die folgende allgemeine Formel (II) ist.

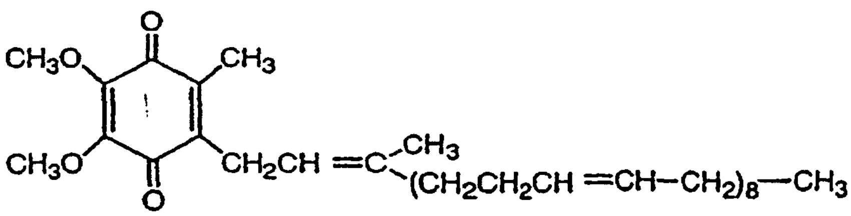

(I)

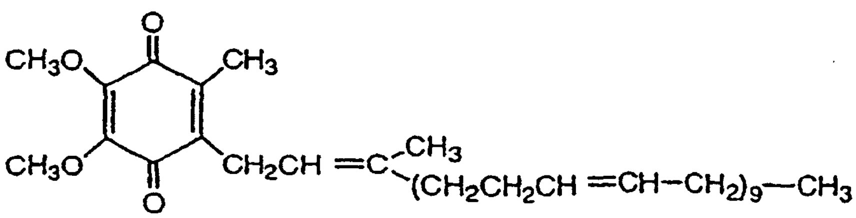

(II)

5. Futterzusammensetzung für Geflügel nach einem der Ansprüche 1 bis 4, wobei der Gehalt des Coenzyms Q 0,0005 bis 0,5 Gew.-% auf der Grundlage der Gesamtmenge der Futterzusammensetzung ist.

## Revendications

1. Composition alimentaire pour volaille qui contient une coenzyme Q et un inhibiteur de génération d'ammoniaque.

2. Composition alimentaire pour volaille selon la revendication 1, dans laquelle le rapport en poids de la coenzyme Q à l'inhibiteur de génération d'ammoniaque contenus dans la composition est de 100:1 à 1:100.

**3.** Composition alimentaire pour volaille selon la revendication 1 ou 2, dans laquelle l'inhibiteur de génération d'ammoniaque est choisi parmi le dialdéhyde-amidon, l'extrait de Yucca, la sarsasaponine et l'acide hydroxamique.

**4.** Composition alimentaire pour volaille selon l'une quelconque des revendications 1 à 3, dans laquelle la coenzyme Q est une coenzyme $Q_9$ représentée par la formule générale (I) suivante ou une coenzyme $Q_{10}$ représentée par la formule générale (II) suivante.

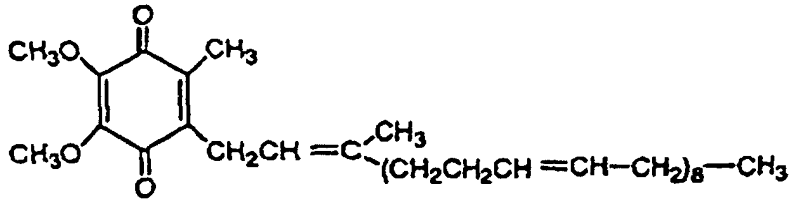

(I)

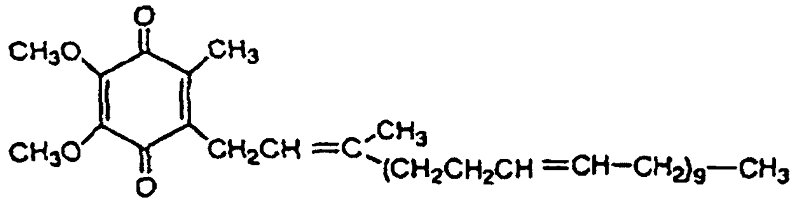

(II)

**5.** Composition alimentaire pour volaille selon l'une quelconque des revendications 1 à 4, dans laquelle la teneur en coenzyme Q est de 0,0005 à 0,5 % en poids sur la base de la quantité totale de la composition alimentaire.